# EUROPEAN PATENT SPECIFICATION

(11) **EP 3 002 437 B1**
(45) Date of publication and mention of the grant of the patent: **19.12.2018**
(21) Application number: 14187543.5
(22) Date of filing: 02.10.2014
(51) Int. Cl.: F02D 29/06, F02D 41/00, F02D 41/02, F02D 41/24, F02G 5/00, F02D 13/02, F01N 5/02, F02D 19/10

(54) **Switchable internal combustion engine for thermal and electric power generation**
Schaltbare Brennkraftmaschine für thermische und elektrische Stromerzeugung
Moteur à combustion interne commutable pour production d'énergie thermique et électrique

(43) Date of publication of application: 06.04.2016
(73) Proprietor: Caterpillar Motoren GmbH & Co. KG, 24159 Kiel (DE)
(72) Inventor: Sixel, Eike Joachim, 24109 Kiel (DE); Wolfgramm, Marius, 24116 Kiel (DE); Holst, Hauke, 24161 Altenholz (DE); Wester, Daniel, 24242 Felde (DE); Sturm, Michael, 24214 Gettorf (DE); Lange, Hendrik Johannes, 24116 Kiel (DE)
(74) Representative: BRP Renaud & Partner mbB Rechtsanwälte Patentanwälte Steuerberater

(56) References cited:
- EP-A1- 1 452 714
- JP-A- 2009 299 664
- US-A- 4 752 697
- US-A1- 2005 115 241
- US-A1- 2009 206 599
- US-A1- 2014 007 561

## Description

### Technical Field

The present disclosure relates to a method for operating an internal combustion engine, and more particularly to operating the internal combustion engines in two different operation modes dedicated to generate thermal power or electric power.

### Background

Internal combustion engines, such as Otto or Diesel engines, are frequently used in generator sets to generate electric power by coupling the internal combustion engine to an electric generator. The efficiency of those generator sets often is rather low, because heat produced during the electric power generation usually is discharged into the environment without being recovered. With fuel prices on the rise, generator sets nowadays therefore often include an engine heat recovery system which recovers some of the heat for heating-up water or the like.

Those so-called cogeneration plants - power plants which generate electric power and thermal power - typically use 10 to 20 internal combustion engines. Those combustion engines are either optimized for generating electric power or optimized for generating thermal power, depending on the electric and thermal power demand which has to be provided by the cogeneration plant. Thus, current cogeneration plants are either optimized for generating electric power or thermal power. A method for operating an internal combustion engine to provide heat on a ship is disclosed, for example, in EP 2 527 244 A1.

JP 2009 299664 A discloses an energy system with a combustion mode change over means that includes a stoichiometric combustion mode and a stoichiometric-EGR combustion mode. The combustion mode is switched to the stoichiometric combustion mode under a condition where priority should be given to a heat supply, and to the stoichiometric-EGR combustion mode under a condition where priority should be given to an electric power supply.

US 2009/206599 A1 discloses a cogeneration system having a generator, an internal combustion engine for driving the generator such that exhaust heat of the internal combustion engine is supplied to a thermal load, a power demand detector that detects a power demand of an electric load, and a thermal demand detector that detects a thermal demand of the thermal load. An ignition timing and a fuel injection of the internal combustion engine is controlled in response to the detected power demand and the detected thermal demand.

US 2014/007561 A1 discloses a catalytic converter warum-up control apparatus for a hybrid vehicle including a catalytic converter warm-up controller that activates the catalytic converter upon start-up of an internal combustion engine provided in the hybrid vehicle.

Another cogeneration system is known from US 2005/115241 A and an engine generator apparatus is known from EP 1 452 714 A1.

The present disclosure is directed, at least in part, to improving or overcoming one or more aspects of prior systems.

### Summary of the Disclosure

The above object is solved by a method for operating an internal combustion engine according to claim 1, an internal combustion engine according to claim 11, and a cogeneration plant according to claim 12. Further developments are given in the dependent claims.

In an aspect of the present disclosure, a method for operating an internal combustion engine configured to be coupled to both an electric generator for generating electric power and a heat recovery system for generating thermal power is disclosed. Said internal combustion engine is operable in an electric power generation mode and a thermal power generation mode. The method comprises providing a first set of characteristic engine maps dedicated for operating the internal combustion engine in the thermal power generation mode, providing a second set of characteristic engine maps dedicated for operating said internal combustion engine in the electric power generation mode. The method further comprises switching between the first and second sets of characteristic engine maps upon an input.

In another aspect of the present disclosure, an internal combustion engine is disclosed. The internal combustion engine is configured to be coupled to both an electric generator for generating electric power and a heat recovery system for generating thermal power. The internal combustion engine is operable in an electric power generation mode and a thermal power generation mode. The internal combustion engine comprises an air supply system configured to provide air to a combustion unit of the internal combustion engine, a fuel supply system configured to provide fuel to the combustion unit, a fuel ignition system configured to ignite a fuel-air mixture admitted to the combustion unit, and a control unit operably connected to the air supply system, the fuel supply system and the fuel ignition system. The control unit comprises a memory configured to store a first set of characteristic engine maps dedicated for operating the internal combustion engine in the thermal power generation mode and a second set of characteristic engine maps dedicated for operating said internal combustion engine in the electric power generation mode. The control unit is further configured to switch between the first and second sets of characteristic engine maps upon an input.

In another aspect of the present disclosure, a cogeneration plant, such as a combined heat and power plant is disclosed. The cogeneration plant comprises an internal combustion engine as exemplary disclosed herein. The cogeneration plant further comprises an electric generator drivably coupled to the internal combustion engine and configured to convert mechanical power of the internal combustion engine into electric power. The cogeneration plant further comprises a heat recovery system coupled to the internal combustion engine and configured to convert heat produced by the internal combustion engine into thermal power. A control unit of the internal combustion engine is configured to determine an electric power output of the electric generator and a thermal power output of the heat recovery system. The control unit is further configured to determine an electric power demand and a thermal power demand to be provided by the cogeneration plant, and switch the internal combustion engine from the first to the second set of characteristic engine maps if the electric power demand exceeds the electric power output, and from the second to the first set of characteristic engine maps if the thermal power demand exceeds the thermal power output.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic view of an exemplary cogeneration plant;
Fig. 2 shows a schematic flow diagram of an exemplary strategy for controlling an internal combustion engine being operable in an electric and a thermal power generation mode;
Fig. 3 shows another exemplary strategy for controlling an internal combustion engine depending on an electric or thermal power demand to be provided by the cogeneration plant; and
Fig. 4 shows another exemplary strategy for operating the internal combustion engine in safe mode, if the power demand cannot be provided.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that an internal combustion engine can be operated with two sets of characteristic engine maps dedicated for operating the internal combustion engine in either an electric power generation mode or a thermal power generation mode.

Within the meaning of this disclosure, the term "electric power generation mode" describes an operation of the internal combustion engine in which a required electric power output is produced using as little fuel as possible. Or in other words: For a given amount of fuel, the internal combustion engine may generate a maximized amount of electric power with a reduced thermal usability.

The term "thermal power generation mode", on the other hand, describes an operation mode of the internal combustion engine in which for a given amount of fuel the internal combustion engine is operated to produce a maximized amount of heat. "Heat" produced by the internal combustion engine may include any heat recoverable by a heat recovery system, for example, heat contained in a cooling water circuit or a lube oil circuit of the internal combustion engine, heat contained in the hot exhaust gases of the internal combustion engine, or heat recovered by cooling an inlet or charge air of the internal combustion engine.

The present disclosure is further based on the realization that a control strategy may be used to switch between the two sets of characteristic engine maps for operating the internal combustion engine in either the thermal power generation mode or the electric power generation mode. Switching from one to the other power generation mode may depend upon an input, such as a user input, and/or may depend on an electric or thermal power demand. Thus, in some embodiments, the control strategy may determine an electric and thermal power demand and switch the operation of the internal combustion engine, if the electric or thermal power output of the internal combustion engine is below the respective power demand.

A cogeneration plant may comprise said internal combustion engine operable in the two power generation modes for generating electric and thermal power. Depending on the power demand to be provided by the cogeneration plant, the control strategy of the internal combustion engine may switch the operation mode of the internal combustion engine such that the electric and/or thermal power outputs satisfy the electric and/or thermal power demands. Thus, instead of a cogeneration plant optimized to generate either the electric or the thermal power demand, the cogeneration plant may comprise an internal combustion engine optimized for both power generation modes.

The present disclosure is further based in part on the realization that switching from the electric power generation mode to the thermal power generation mode may comprise, for example, decreasing an air-to-fuel ratio, delaying an ignition timing, increasing an intake air temperature, decreasing a compression ratio, increasing a charge air temperature, decreasing a Miller cycle, or increasing a number of fuel or ignition-fuel injections (if applicable to the engine), and vice versa, if the operation of internal combustion engine is switched from the thermal power generation mode to the electric power generation mode.

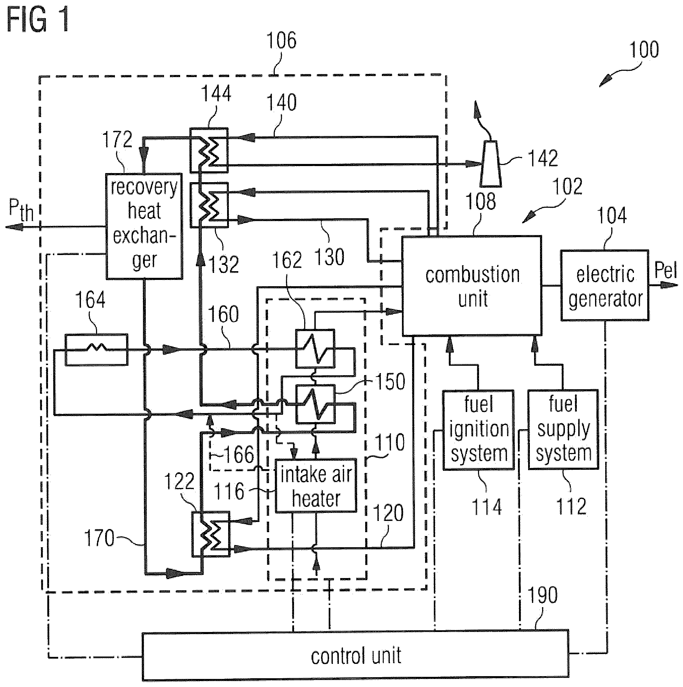

A cogeneration plant comprising an internal combustion engine operable in the electric and thermal power generation mode, and exemplary control strategies for operating the internal combustion engine are shown in Fig. 1 and Fig. 2 to 4, respectively.

As illustrated in Fig. 1, the cogeneration plant 100 comprises at least one internal combustion engine 102 coupled to an electric generator 104 and a heat recovery system 106. The electric generator 104 is coupled to an output shaft of internal combustion engine 102 for converting mechanical power of internal combustion engine 102 into electric power. Electric generator 104 may be any electric generator known to the skilled person. Electric generator 104 may additionally be coupled to a switchgear (not shown) for monitoring and managing the electric power output of electric generator 104. In some embodiments, cogeneration plant 100 comprises a plurality of internal combustion engines 102, such as 10 to 20 internal combustion engines 102, each coupled to a respective electric generator 104, which in turn are coupled to the switchgear for managing the electric power output of cogeneration plant 100.

Internal combustion engine 102 may further include a combustion unit 108 such as, for example, a liquid or gaseous fuel powered combustion unit. Combustion unit 108 may include a plurality of cylinders and a plurality of piston assemblies disposed within the cylinders (not shown). Combustion unit 108 may include any number of cylinders, and the cylinders may be disposed in any configuration, for example, in "V", in-line, or radial configuration.

Internal combustion engine 102 includes an air supply system 110, a fuel supply system 112, and a fuel ignition system 114.

Air supply system 110 provides intake air to cylinders of combustion unit 108. Air supply system 110 includes an intake air heater 116 for increasing an intake air temperature above ambient temperature, such as from about 25°C to about 45°C. Intake air heater 116 may be any type of intake air heater known to the skilled person. Additionally or alternatively, air supply system 110 may include one or more turbochargers (not shown). The one or more turbochargers may be disposed downstream of intake air heater 116 and used for compressing the intake air, thereby further increasing the intake air temperature. Typical temperatures of compressed intake air downstream of the one of more turbochargers are around 260°C. Within the meaning of this disclosure compressed intake air may also be referred to as charge air.

Fuel supply system 112 provides fuel to combustion unit 108. In some embodiments, fuel supply system 112 may supply liquid fuel to combustion unit 108, for example, when internal combustion engine 102 is a liquid fuel powered Diesel or Otto internal combustion engine. In some embodiments, fuel supply system 112 may supply gaseous fuel to combustion unit 108, for example, when internal combustion engine 102 is a gaseous fuel powered Diesel or Otto internal combustion engine. In case internal combustion engine 102 is a dual-fuel internal combustion engine, fuel supply system 112 may supply liquid fuel, such as Diesel fuel to combustion unit 108 during operation in an liquid fuel mode, and gaseous fuel such as natural gas during operation in an gaseous fuel mode. Fuel supply system 112 may include one or more tanks for storing gaseous and/or liquid fuel (not shown), and may include fuel admission and fuel injection systems (not shown) for injecting liquid and/or gaseous fuel into cylinders of combustion unit 108.

Fuel ignition system 114 provides an ignition energy required for igniting a fuel-air mixture admitted to combustion unit 108. The ignition energy may be provided, for example, by an electric spark in case of spark ignited liquid or gaseous fuel internal combustion engines, by ignition flames in case of pre-combustion chamber gaseous fuel powered Otto internal combustion engines, or by injecting an ignition fuel in case of gaseous fuel powered Diesel internal combustion engines or dual-fuel internal combustion engines. The amount of ignition energy may be adopted depending on the type of internal combustion engine, for example, by an electric discharge, an air-to-fuel ratio in the pre-combustion chamber, or by an amount and/or pressure of the ignition fuel. In case internal combustion engine 102 is a self-ignited liquid fuel powered Diesel internal combustion engine, fuel ignition system 114 may not be required.

Internal combustion engine 102 further includes a lube oil circuit 120 comprising lube oil for lubricating internal combustion engine 102, a cooling water circuit 130 for cooling internal combustion engine 102 and an exhaust gas circuit 140 for discharging hot exhaust gas into the environment. In some embodiments, exhaust gas circuit may additionally include exhaust gas cleaning units 142, such as de-NOx or de-SOx cleaning units, for cleaning exhaust gas prior to discharging the exhaust gas into the environment.

Heat recovery system 106 comprises a heat recovery circuit 170 connected to lube oil circuit 120 via a lube oil heat exchanger 122, to cooling water circuit 130 via a cooling water heat exchanger 132, and to exhaust gas circuit 140 via an exhaust gas heat exchanger 144. Heat recovery system 106 is configured to extract heat produced by internal combustion engine 102 and transfer that heat to heat recovery circuit 170. The transferred heat can then be used for heating other circuits such as a process water circuit connected to heat recovery circuit 170 via, for example, a recovery heat exchanger 172.

If air supply system 110 includes one or more turbochargers for compressing intake air, heat recovery system 106 by additionally be connected to air supply system 110 via a first intake air heat exchanger 150. First intake air heat exchanger 150 may extract a first amount of heat out of the compressed intake air, thereby cooling the compressed intake air, for example, from temperatures of around 260°C (depending on the boundary condition) down to temperatures of around 90°C. First intake air heat exchanger 150 may therefore also constitute a high-temperature charge air cooler.

Additionally or alternatively, the already cooled down intake air may be further cooled down using a second intake air heat exchanger 162. Second intake air heat exchanger 162 extracts a second amount of heat out of the intake air, thereby further cooling the compressed intake air, for example, from temperatures of around 90°C down to temperatures of around 45°C. Second intake air heat exchanger 162 may therefore constitute a low-temperature charge air cooler.

Second intake air heat exchanger 162 may be connected to heat recovery circuit 170 for extracting the second amount of heat from the compressed intake air.

In some embodiments, second intake air heat exchanger 162 may be connected to a separate low-temperature cooling circuit 160, as shown in Fig. 1. The second amount of heat may be discharged into the environment via, for example, a cooler 164. Additionally or alternatively, low-temperature cooling circuit may be connected to intake air heater 116 via circuit 166. Cooled down intake air may then be used to heat intake air, thereby reducing the costs for operating intake air heater 116.

Internal combustion engine 102 may further comprise a control unit 190 for controlling operation of internal combustion engine 102. Control unit 190 may be connected to air supply system 110, fuel ignition system 114, fuel supply system 112, and intake air heater 116 of internal combustion engine 102 via control connection lines for controlling, for example, an air-to-fuel ratio of a fuel-air mixture admitted to combustion unit 108, an ignition timing and/or ignition energy provided by fuel ignition system 114, and an intake air temperature provided by intake air heater 116.

Control unit 190 may further be connected to electric generator 104 for monitoring an electric power output, and may be connected to recovery heat exchanger 172 for monitoring a thermal power output. Monitoring a thermal power output by control unit 190 may involve monitoring an output temperature of heat recovery circuit 170 at recovery heat exchanger 172, as well as a temperature difference between the output temperature and a temperature of the circuit connected to heat recovery circuit 170 via recovery heat exchanger 172. Based on the monitored output temperature and temperature difference, control unit 190 may determine the thermal power output of heat recovery system 106 using respective equations.

In some embodiments, control unit 190 may further be connected to power consumers of cogeneration plant 100 via readout connection lines (not shown) to determine an electric or thermal power demand that has to be provided by the cogeneration plant.

Control unit 190 of internal combustion engine 102 may be a single microprocessor or multiple microprocessors including means for controlling, among others, an operation of various components of internal combustion engine 102. Control unit 190 may be a general engine control unit (ECU) capable of controlling numerous functions associated with internal combustion engine 102 and/or its associated components. Control unit 190 may include all components required to run an application such as, for example, a memory, a secondary storage device, and a processor such as a central processing unit or any other means known in the art for controlling internal combustion engine 102 and its components. Various other known circuits may be associated with control unit 190, including power supply circuitry, signal conditioning circuitry, communication circuitry and other appropriate circuitry. Control unit 190 may analyze and compare received and stored data, and, based on instructions and data stored in memory or input by a user, determine whether action is required. For example, control unit 190 may receive a power demand to be provided by cogeneration plant 100, compare the power demand with monitored electric and thermal power outputs of electric generator 104 and heat recovery system 106, respectively, and, based on the results of the comparison, transmit signals to one or more components of internal combustion engine 102 to alter the operation of the same.

### Industrial Applicability

Exemplary internal combustion engines suited to the disclosed control strategy are, for example, DF internal combustion engines of the series M46DF, M34DF and M43DF or gaseous fuel internal combustion engines of the series GCM34 and GCM46 manufactured by Caterpillar Motoren GmbH & Co. KG, Kiel, Germany, or other spark ignited open or pre-combustion chamber gaseous fuel engines. Respective internal combustion engines may be operated at 450 - 1500 rpm and may be applied, for example, in medium speed power generator sets, a propulsion system and/or compressor or pump drives. Other engines suited to the disclosed control procedure are, for example, gaseous fuel engines of the series 3600 and 3500, as well as other gas or dynamic gas blending engines manufactured by Caterpillar Inc., which are typically operated at speeds of up to 1500 rpm or even 3000 rpm. One skilled in the art will however appreciate that the disclosed control strategies may also be adapted to suit other internal combustion engines.

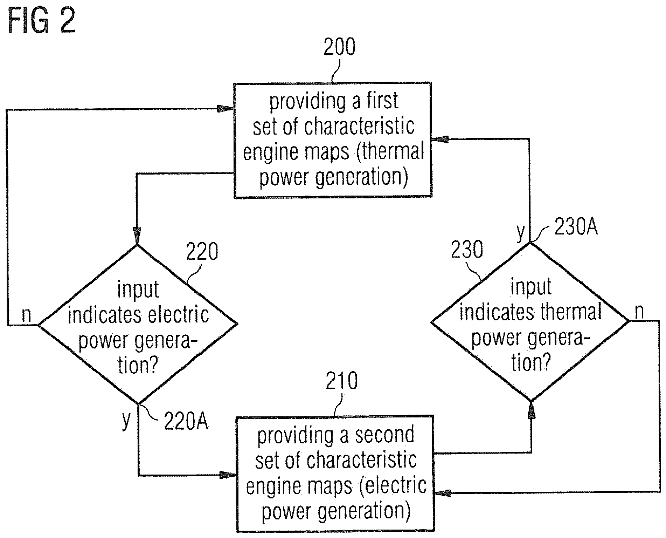

In the following, operation and control of an internal combustion engine - such as internal combustion engine 102 described with reference to Fig. 1 - are described in connection with Fig. 2 to 4. For illustration purposes, the control strategies described herein are disclosed with reference to structural elements disclosed in Fig. 1. However, a skilled person will appreciate that the respective steps of the control strategies can be performed on other embodiments as well.

In Fig. 2, a schematic flow diagram of an exemplary strategy for controlling internal combustion engine 102 in a cogeneration plant such as cogeneration plant 100 of Fig. 1 is shown.

The control strategy adjusts an operation mode of internal combustion engine 102 such that internal combustion engine 102 is either operated in electric power generation mode or thermal power generation mode for generating electric power or thermal power upon an input provided to control unit 190. For this, control unit 190 has stored on its memory sets of characteristic engine maps which are dedicated for operating internal combustion engine in electric or thermal power generation mode.

It should be recalled, that within the meaning of this disclosure, the "electric power generation mode" describes an operation of internal combustion engine 102 in which for a given amount of fuel supplied to internal combustion engine 102, electric generator 104 generates a maximized amount of electric power with a reduced thermal usability. A person skilled in the art will appreciate that for a given amount of fuel the amount of electric power may be maximized, when internal combustion engine 102 is operated at an engine efficiency that is as large as possible, because with increasing engine efficiencies an output torque of the output shaft of internal combustion engine 102 increases, and therewith a conversion of mechanical power into electric power also increases.

The "thermal power generation mode", on the other hand, describes an operation of internal combustion engine 102 in which for a given amount of fuel, heat recovery system 106 generates a maximized amount of thermal power. Thus, when internal combustion engine 102 is operated in thermal power generation mode, heat recovery system 106 may recover more heat from internal combustion engine 102 than if internal combustion engine 102 is operated in the electric power generation mode using the same amount of fuel. A person skilled in the art will appreciate that internal combustion engine 102 may generate more heat when it is operated such that an exhaust gas temperature of internal combustion engine 102 is increased. Or in other words: In thermal power generation mode the amount of heat produced by internal combustion engine 102 and therewith the amount of thermal power recovered by heat recovery system 106 may be maximized by maximizing, inter alia, the exhaust gas temperature.

Increasing an exhaust gas temperature - when internal combustion engine 102 is operated in thermal power generation mode - or increasing an output torque - when internal combustion engine 102 is operated in electric power generation mode - may be achieved through dedicated sets of characteristic engine maps. For example, for operating internal combustion engine 102 in thermal power generation mode, a first set of characteristic engine maps may comprise operating parameters that are selected such that the operation of internal combustion engine 102 results in an increased exhaust gas temperature. And for operating internal combustion engine 102 in electric power generation mode, a second set of characteristic engine maps may comprise operating parameters that are selected such that the operation of internal combustion engine 102 results in an increased output torque.

Operating parameters for providing an increased exhaust gas temperature or an increased output torque may be selected from the group comprising an intake air temperature, an intake air pressure, an air-to-fuel-ratio, a pre-chamber gas supply pressure, a pre-chamber gas supply duration, an ignition fuel injection pressure, an ignition fuel injection duration, an ignition timing, an ignition-fuel timing, a charge air temperature, a charge air pressure, a valve timing, multiple fuel and/or ignition-fuel injections, and a compression ratio.

A skilled person will appreciate that other operating parameters than the above mentioned operating parameters may be used as well.

Operating parameters of the first set of characteristic engine maps may differ from operating parameters of the second set of characterstic engine maps such that, for example, in the first set of characteristic engine maps, an air-to-fuel ratio is smaller compared to an air-to-fuel ratio in the second set of characteristic engine maps. Additionally or as an alternative, an ignition may occur later for the first set of characteristic engine maps compared to the second set of characteristic engine maps, an intake air temperature or charge air temperature may be larger for the first set of characteristic engine maps compared to the second set of characteristic engine maps, a Miller cycle may be smaller for the first set of characteristic engine maps compared to the second set of characteristic engine maps, and a compression ratio may be smaller for the first set of characteristic engine maps compared to the second set of characteristic engine maps.

A skilled person will appreciated that the first and second characteristic engine maps may comprise any of the described operating parameters in any combination suitable to achieve an increased exhaust gas temperature or an increased output torque. Appropriate values for operating parameters and combinations of those operating parameters for producing an increased exhaust gas temperature or an increased output torque may be obtained, for example, during testing of internal combustion engine 102. A skilled person will appreciate that this testing may be performed for various speeds and loads of internal combustion engine 102 depending on various thermal and electric power outputs. Thus, first and second characteristic engine maps may be available for various loads or speeds of internal combustion engine 102, and therewith for various thermal and electric power outputs.

Control unit 190 has stored those various first and second sets of characteristic engine maps for dedicated operation of internal combustion engine 102 in thermal and electric power generation mode on its memory and provides those first and second sets of characteristic engine maps at steps 200 and 202 of the exemplary control strategy as shown in Fig. 2.

At steps 220 and 230, control unit 190 may switch between the first and second sets of characteristic engine maps upon an input received by control unit 190. Thus, if internal combustion engine 102 is set to thermal power generation mode and the input indicates operation of internal combustion engine in electric power generation mode, at point 220A, control unit 190 determines that a switch is required and switches from the first set of characteristic engine maps to the second set of characteristic engine maps. If the input does, however, indicate that internal combustion engine 102 is to be operated in thermal power generation mode, then control unit 190 determines that no switch is required, and, accordingly, does not switch to the second set of characteristic engine maps, because internal combustion engine is already set to thermal power generation mode.

Likewise, if internal combustion engine 102 is in electric power generation mode and the input indicates operation of internal combustion engine in thermal power generation mode, at point 230A, control unit 190 switches from the second to the first set of characteristic engine maps, or does not switch if the input indicates the electric power generation mode.

A skilled person will appreciate that switching between the first and second characteristic engine maps may occur during operation of internal combustion engine 102 or prior to operation of internal combustion engine 102, for example, upon start-up of the engine.

The received input may be, for example, an input provided by an operator of internal combustion engine 102 actuating a lever provided on a control panel of internal combustion engine 102. The input may also be provided by an operator of cogeneration plant 100 actuating a switch on a control panel of cogeneration plant 100.

In some embodiments, control unit 190 may switch between the first and second sets of characteristic engine maps only if a series of inputs indicate the same operation mode, thereby double-checking the provided input and/or accounting for noise in the provided input, for example, if the switch is not properly actuated.

Switching between first and second sets of characteristic engine maps may be performed in a single step by control unit 190. Thus, if internal combustion engine is, for example, in thermal power generation mode and the input indicates electric power generation mode, control unit 190 switches from first to second characteristic engine maps within one step, for example, by increasing an air-to-fuel ratio from the values provided in the first characteristic engine map to the values provided in the second characteristic engine map. Likewise, control unit 190 may advance an ignition timing, decrease an intake air temperature, decrease a charge air temperature, increase a Miller cycle, or increase a compression ratio, within one step from values provided in the first characteristic engine map to values provided in the second characteristic engine map, an vice versa, if internal combustion engine 102 switches from the second to the first set of characteristic engine maps.

To provide a smoother transition between the two power generation modes, and therewith between the values of the operating parameters provided by the two sets of characteristic engine maps, control unit 190 may also interpolate between the values of the operating parameters provided in the first and second sets of characteristic engine maps and may adapt operating parameters over a plurality of adjustments steps.

If control unit 190 increases an intake air temperature, this increase may be performed, for example, by sending a respective control command to intake air heater 116. Additionally or as an alternative, if internal combustion engine 102 comprises one or more turbochargers, control unit 190 may send a control command to the one or more turbochargers for compressing the intake air, thereby further increasing the intake air temperature. A skilled person will appreciate that by compressing intake air also a density of intake air increases, and therewith an amount of intake air admitted to combustion unit 108 potentially causing a change in an air-to-fuel ratio of the fuel-air mixture admitted to combustion unit 108. Control unit 190 may therefore take into account that change in air-to-fuel ratio and may, if necessary, perform appropriate adjustments to adjust or maintain the air-to-fuel ratio accordingly.

In some embodiments, intake air heater 116 may be a combined intake air heater-and-cooler unit to cool down the intake air temperature, if necessary. A skilled person will appreciate that the intake air temperature may also be adjusted using intake air heater 116 together with first and second intake air heat exchanger 150, 162, because first and second intake air heat exchanger 150, 162 function as charger air coolers.

If control unit 190 adapts a Miller cycle during switching between the first and second characteristic engine map, this adaption may be performed, for example, by changing an actuating timing of inlet valves and/or outlet valves associated with cylinders of combustion unit 108. The actuating timing may be adjusted, for example, using a flexible cam technology in which a cam follower is configured to follow a cam of a camshaft of internal combustion engine. The cam follower is supported by a cam follower support. The cam follower support is pivotable about a pivot axis spaced apart from a camshaft axis. An actuator is disposed between the cam follower support and the cam follower and may displace the cam follower in a direction perpendicular to the camshaft axis. By displacing the cam follower relative to the camshaft axis an actuation timing of components connected to the cam follower, such as operating lifters of inlet and/or outlet valves, may be adjusted. Thus, the flexible cam technology may facilitate in adjusting, for example, the Miller cycle of one or more cylinders of combustion unit 108.

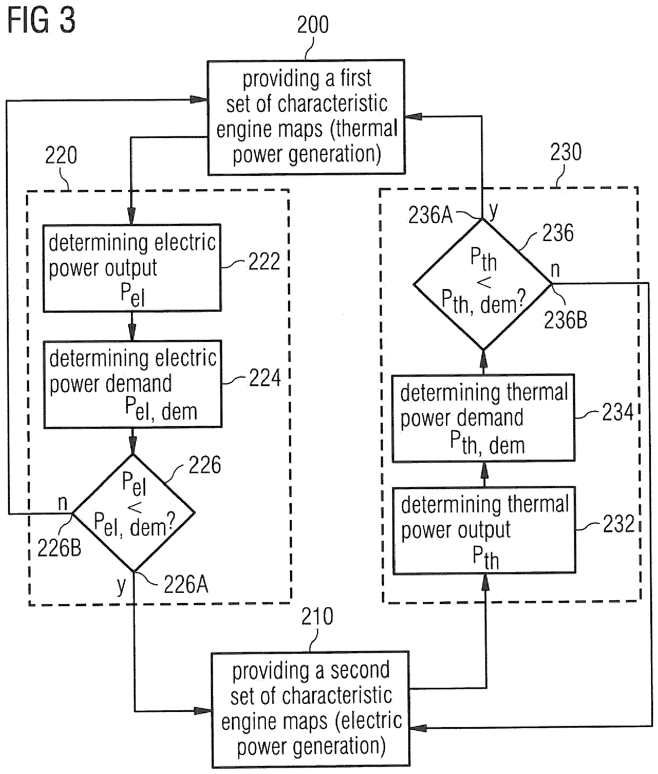

In some embodiments, the input may not be provided by an operator of internal combustion engine 102 or by an operator of cogeneration plant 100, but may be determined based on an electric or thermal power demand to be provided by cogeneration plant 100. In Fig. 3, an exemplary control strategy for operating internal combustion engine 102 based on a determined electric and thermal power demand is shown.

As can be seen, steps 220 and 230 during which control unit 190 decides whether a switch between the first and second sets of characteristic engine maps is performed comprise further control steps. During those control steps control unit 190 determines an electric and thermal power output as well as an electric and thermal power demand. Based on the power outputs and power demands, control unit 190 then determines whether a switch between the first and second sets of characteristic engine maps is necessary or not. For clarity reasons, in Fig. 3 the electric power output is also referenced using Pₑₗ, the thermal power output is referenced using Pₜₕ, the electric power demand is referenced using P_{el, dem}, and the thermal power demand is referenced using P_{th, dem}.

For example, if internal combustion engine is set to thermal power generation mode, control unit 190 determines at step 222 an electric power output of electric generator 104. Control unit 190 further determines at step 224 an electric power demand to be provided by cogeneration plant 100. At step 226, control unit 190 then determines whether the electric power output equals the electric power demand. If control unit 190 determines at point 226A that the electric power output of electric generator 104 is below the electric power demand to be provided by cogeneration plant 100, then control unit 190 switches from the first set of characteristic engine maps to the second set of characteristic engine maps. If, however, control unit 190 determines at point 226B that the electric power output equals the electric power demand or is even above the electric power demand, then control unit 190 does not switch to the second set of characteristic engine maps, but keeps the first set of characteristic engine maps, because for operation of internal combustion engine 102 in thermal power generation mode heat recovery system 106 generates enough thermal power to satisfy the thermal power demand.

Likewise, if internal combustion engine 102 is set to electric power generation mode, control unit 190 determines at steps 232 a thermal power output of heat recovery system 106, and, at step 234, determines a thermal power demand to be provided by cogeneration plant 100. At step 236, control unit 190 then determines whether the thermal power output equals the thermal power demand. If control unit 190 determines at point 236A that the thermal power output is below the thermal power demand, then control unit 190 switches from the second set of characteristic engine maps to the first set of characteristic engine maps. If, however, control unit 190 determines at point 236B that the thermal power output equals the thermal power demand or is even above the thermal power demand, then control unit 190 does not switch to the first set of characteristic engine maps, but keeps the second set of characteristic engine maps, because for operation of internal combustion engine 102 in electric power generation mode electric generator 104 produces enough electric power to satisfy the electric power demand.

From the above description it becomes clear, that depending on the electric and thermal power outputs and electric and thermal power demands, internal combustion engine 102 may provide at least the required electric power output to satisfy the electric power demand when operating in electric power generation mode, and may at least provide the required thermal power output to satisfy the thermal power demand when operating in thermal power generation mode. Depending on the electric and thermal power outputs and power demands, there may be instances where internal combustion engine 102 can provide both the required thermal and electric power output to satisfy both the electric and thermal power demand.

A skilled person will appreciate that the electric and thermal power outputs (steps 222 and 232, respectively) and the electric and thermal power demands (steps 224 and 234, respectively) may be determined by control unit 190 for both the electric and the thermal power generation mode of internal combustion engine 102. Thus, steps 222, 232, 224 and 234 may be performed simultaneous in both power generation modes of internal combustion engine 102.

In some embodiments, control unit 190 may perform steps 222 to 226 and steps 232 to 236 for a plurality of power output readings and/or power demand readings, and switch to the respective set of characteristic engine maps only if for a series of consecutive readings control unit 190 determined at steps 226 and 236 that a switch is required, thereby accounting for noise in the determined electric and thermal power outputs and/or power demands.

In some embodiments, control unit 190 may switch between the first and second sets of characteristic engine maps only if the electric and thermal power outputs determined at steps 222 and 232, respectively, are less than a threshold portion of the electric and thermal power demands determined at steps 224 and 234, respectively. By using those threshold portions, control unit 190 may determine at steps 226 and 236 in a more robust way whether the electric or thermal power output is below the electric or thermal power demand in case the power output readings and/or power demand readings are subject to fluctuations. Threshold portions may be stored on the memory of control unit 190 and may depend on the load or speed of internal combustion engine 102.

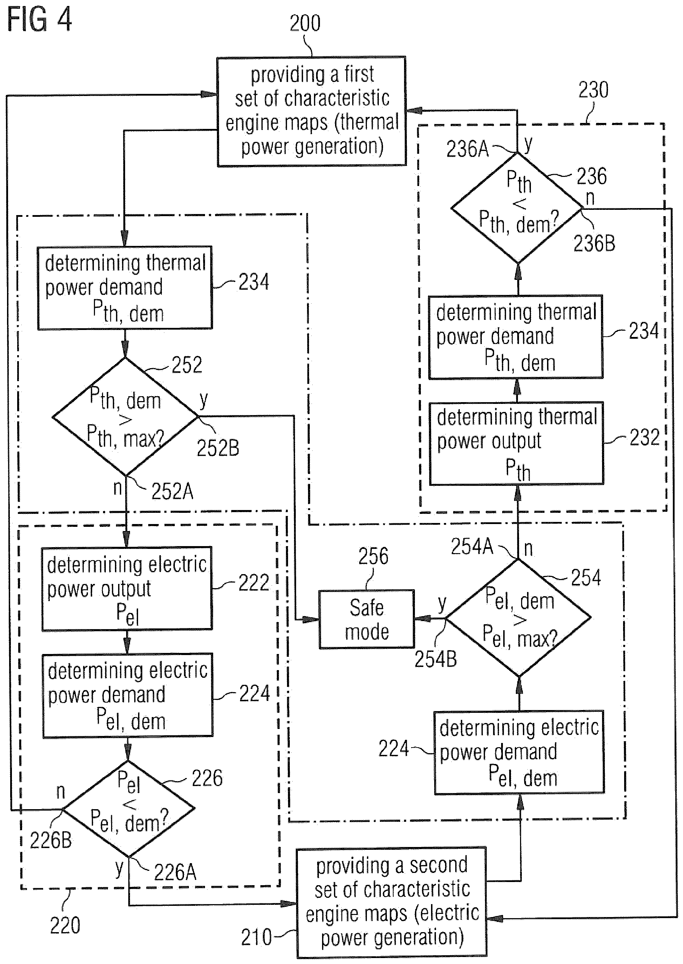

In some cases, the electric and/or thermal power demand may not be satisfied by internal combustion engine 102, because, for example, the electric and/or thermal power demand exceeds a maximum electric or thermal power output of internal combustion engine 102. Fig. 4 therefore shows another exemplary control strategy where internal combustion engine 102 is operated in safe mode, if the electric or thermal power demand exceeds the respective maximum electric or thermal power output. Again, control steps already explained in connection with Fig. 2 and 3, have the same reference numerals. For clarity, in Fig. 4 maximum electric power output is referenced using (P_{el, max}), and maximum thermal power output is referenced (P_{th, max}).

In Fig. 4, control steps performed by control unit 190 for determining whether internal combustion engine 102 has to be operated in safe mode are shown in the dashed-dotted box.

As previously mentioned, control unit 190 may determine the electric and thermal power demands (steps 224 and 234, respectively) together with the electric and thermal power outputs (steps 222 and 232, respectively) independent of the power generation mode internal combustion engine 102 is set to. Thus, if internal combustion engine 102 is set to the thermal power generation mode, control unit 190 may also determine the thermal power demand (step 234), and likewise, if internal combustion engine 102 is set to the electric power generation mode, control unit 190 may also determine the electric power demand (step 224).

If internal combustion engine 102 is set to thermal power generation mode, control unit 190 determines at step 252, whether the thermal power demand exceeds a maximum thermal power output internal combustion engine 102 is able to provide. If control unit 190 determines at point 252B that the thermal power demand exceeds the maximum thermal power output, control unit 190 then switches the operation of internal combustion engine 102 to safe mode. If control unit 190 determines at point 252A that the thermal power demand does not exceed the maximum thermal power output, the control strategy then proceeds to control step 220 already explained.

Likewise, if internal combustion engine 102 is set to electric power generation mode, control unit 190 determines at step 254, whether the electric power demand exceeds a maximum electric power output internal combustion engine 102 is able to provide. If control unit 190 determines at point 254B that the electric power demand exceeds the maximum electric power output, control unit 190 then switches the operation of internal combustion engine 102 to safe mode. If control unit 190 determines at point 254A that the electric power demand does not exceed the maximum electric power output, the control strategy then proceeds to step 230 already explained.

The maximum thermal power output and the maximum electric power output are stored on the memory of control unit 190 and are readily accessible by control unit 190. Maximum thermal and electric power outputs may also depend on the type of internal combustion engine 102 used in cogeneration plant 100.

The operation of internal combustion engine 102 in safe mode may comprise operating parameters that result in safe operation of internal combustion engine 102. Operating parameters for operating internal combustion engine 102 in safe mode may be stored on the memory of control unit 190.

In some embodiments, control unit 190 may issue a warning such as a warning tone or warning light, if at points 252B and 254B control unit 190 determined that internal combustion engine needs to be operated in safe mode.

A skilled person will appreciate that steps 252B and 254B performed by control unit 190 may also be performed prior to operating internal combustion engine 102. Thus, if the electric or thermal power demand exceed the maximum electric or thermal power output, respectively, control unit 190 may just issue the warning without actually operating internal combustion engine 102.

Using the herein disclosed control strategies internal combustion engines may be operable to produce both an increased amount of thermal power and an increased amount of electric power when operated using dedicated characteristic engine maps. Current cogeneration plants use internal combustion engines dedicated to produce either an increased amount of thermal power or an increased amount of electric power. By using the herein disclosed internal combustion engines operable in both an electric power operation mode and a thermal power generation mode, cogeneration plant may be able to cope more easily with conflicting electric and thermal power demands and therefore may react quicker and more flexibly to changing power demands. For example, during winter, more thermal power is used for heating. Whereas during summer, more electric power is used for cooling. Cogeneration plants may be able to provide that thermal power and electric power using the herein disclosed control strategies and internal combustion engines by switch between the respective power generation modes.

Although the preferred embodiments of this invention have been described herein, improvements and modifications may be incorporated without departing from the scope of the following claims.

## Claims

1. A method for operating an internal combustion engine (102) configured to be coupled to both an electric generator (104) for generating electric power and a heat recovery system (106) for generating thermal power, the internal combustion engine (102) being operable in an electric power generation mode and a thermal power generation mode, the method comprising:
providing a first set of characteristic engine maps comprising operating parameters for operating the internal combustion engine (102) in the thermal power generation mode;
providing a second set of characteristic engine maps comprising operating parameters for operating said internal combustion engine (102) in the electric power generation mode; and
switching between the first and second sets of characteristic engine maps upon an input, wherein the switching further comprises:
determining an electric power output (Pₑₗ);
determining an electric power demand (P_{el, dem});
determining whether the electric power output (Pₑₗ) is below the electric power demand (P_{el, dem}); and
switching from the thermal power generation mode to the electric power generation mode, if the electric power output (Pₑₗ) is below the electric power demand (P_{el, dem}); and/or
determining a thermal power output (Pₜₕ);
determining a thermal power demand (P_{th, dem});
determining whether the thermal power output (Pₜₕ) is below the thermal power demand (P_{th, dem}); and
switching from the electric power generation mode to the thermal power generation mode, if the thermal power output (Pₜₕ) is below the thermal power demand (P_{th, dem}),
the method further comprising:
determining that the thermal power demand (P_{th, dem}) exceeds a maximum thermal power output (P_{th, max}); and/or
determining that the electric power demand (P_{el, dem}) exceeds a maximum electric power output (P_{el, max}); and
operating the internal combustion engine in safe mode using operating parameters that result in a safe operation of the internal combustion engine (102) when it is determined that the thermal or electric power demand exceeds the respective maximum thermal or electric power output.

2. The method according to claim 1, wherein for the first set of characteristic engine maps operating parameters are selected such that the operation of the internal combustion engine (102) results in an increased exhaust gas temperature.

3. The method according to claims 1 and 2, wherein for the second set of characteristic engine maps operating parameters are selected such that the operation of the internal combustion engine (102) results in an increased output torque.

4. The method according to any one of the preceding claims, wherein the first and the second sets of characteristic engine maps include at least one operating parameter from the group comprising an intake air temperature, an intake air pressure, an air-to-fuel-ratio, a pre-chamber gas supply pressure, a pre-chamber gas supply duration, an ignition fuel injection pressure, an ignition fuel injection duration, an ignition timing, an ignition-fuel timing, a charge air temperature, a charge air pressure, a valve timing, multiple fuel and ignition-fuel injections, and a compression ratio.

5. The method according to any one of the preceding claims, wherein switching from the first to the second set of characteristic engine maps comprises at least one of the following adaptions of operating parameters:
increasing an air-to-fuel ratio;
advance an ignition timing;
decreasing an intake air temperature;
decreasing a charge air temperature;
increasing a Miller cycle; and
increasing a compression ratio, wherein
said adaptions of operating parameters are inverted, when the internal combustion engine (102) is switched from the second to the first set of characteristic engine maps.

6. The method according to claim 5, wherein adapting an intake air temperature further comprises heating/cooling the intake air and/or compressing/expanding the intake air.

7. The method according to claims 5 and 6, wherein adapting a Miller cycle is performed by changing an actuating timing of inlet valves and/or outlet valves using, for example, a flexible cam technology including a cam follower configured to follow a cam of a camshaft, the cam follower being displaceable relative to the camshaft axis for adjusting an actuation timing of components connected to the cam follower, such as operating lifters of inlet and/or outlet valves.

8. The method according to any one of the preceding claims, wherein switching between the thermal power generation mode and the electric power generation mode is performed only if a series of consecutive inputs indicates the same power generation mode, thereby accounting for noise in the provided input.

9. The method according to any one of the preceding claims, wherein switching between the thermal power generation mode and the electric power generation mode is performed in a single step or over a plurality of adjustment steps, thereby providing a smoother transition between the power generation modes.

10. The method according to claim 1, wherein switching between the thermal power generation mode and the electric power generation mode is performed only, when the determined thermal or electric power output (Pₜₕ; Pₑₗ) is less than a threshold portion of the respective thermal or electric power demand (P_{th, dem}; P_{el, dem}), thereby accounting for fluctuations in the determined power outputs and/or power demands.

11. An internal combustion engine (102) configured to be coupled to both an electric generator (104) for generating electric power and a heat recovery system (106) for generating thermal power, the internal combustion engine (102) being operable in an electric power generation mode and a thermal power generation mode, the internal combustion engine (102) comprising:
an air supply system (110) configured to provide air to a combustion unit (108) of the internal combustion engine (102);
a fuel supply system (112) configured to provide fuel to the combustion unit (108);
a fuel ignition system (114) configured to ignite a fuel-air mixture admitted to the combustion unit (108); and
a control unit (190) operably connected to the air supply system (110), the fuel supply system (112) and the fuel ignition system (114), the control unit (190) comprising a memory configured to store a first set of characteristic engine maps comprising operating parameters for operating the internal combustion engine (102) in the thermal power generation mode and a second set of characteristic engine maps comprising operating parameters for operating said internal combustion engine (102) in the electric power generation mode, the control unit (190) being configured to switch between the first and second sets of characteristic engine maps upon an input,
wherein the control unit (190) is configured to:
determine an electric power output (Pₑₗ),;
determine an electric power demand (P_{el, dem});
determine whether the electric power output (Pₑₗ) is below the electric power demand (P_{el, dem}); and
switch from the thermal power generation mode to the electric power generation mode, if the electric power output (Pₑₗ) is below the electric power demand (P_{el, dem}); and/or
determine a thermal power output (Pₜₕ);
determine a thermal power demand (P_{th, dem});
determine whether the thermal power output (Pₜₕ) is below the thermal power demand (P_{th, dem}); and
switch from the electric power generation mode to the thermal power generation mode, if the thermal power output (Pₜₕ) is below the thermal power demand (P_{th, dem}), and
wherein the control unit (190) is further configured to:
determine that the thermal power demand (P_{th, dem}) exceeds a maximum thermal power output (P_{th, max}); and/or
determine that the electric power demand (P_{el, dem}) exceeds a maximum electric power output (P_{el, max}); and
operate the internal combustion engine in safe mode using operating parameters that result in a safe operation of the internal combustion engine (102) when it is determined that the thermal or electric power demand exceeds the respective maximum thermal or electric power output.

12. A cogeneration plant (100), such as a combined heat and power plant, the cogeneration plant (100) comprising:
an internal combustion engine (102) according to claim 11;
an electric generator (104) drivably coupled to the internal combustion engine (102) and configured to convert mechanical power of the internal combustion engine (102) into electric power;
a heat recovery system (106) coupled to the internal combustion engine (102) and configured to convert heat produced by the internal combustion engine (102) into thermal power, wherein
the control unit (190) of the internal combustion engine (102) is configured to:
determine an electric power output (Pₑₗ) of the electric generator (104) and a thermal power output (Pₜₕ) of the heat recovery system (106);
determine an electric power demand (P_{el, dem}) and a thermal power demand (P_{th, dem}) to be provided by the cogeneration plant (100); and
switch the internal combustion engine (102) from the first to the second set of characteristic engine maps if the electric power demand (P_{el, dem}) exceeds the electric power output (Pₑₗ), and from the second to the first set of characteristic engine maps if the thermal power demand (P_{th, dem}) exceeds the thermal power output (Pₜₕ).

## Patentansprüche

1. Verfahren zum Betreiben einer internen Brennkraftmaschine (102), die dafür eingerichtet ist, sowohl mit einem elektrischen Generator (104) zum Erzeugen von elektrischer Leistung als auch einem Wärmerückgewinnungssystem (106) zum Erzeugen von thermischer Leistung gekoppelt zu sein, wobei die interne Brennkraftmaschine (102) in einem Elektrische-Leistung-Erzeugungsmodus und einem Thermische-Leistung-Erzeugungsmodus betreibbar ist, das Verfahren umfassend:
Bereitstellen eines ersten Satzes von kennzeichnenden Maschinenplänen, die Betriebsparameter zum Betreiben der internen Brennkraftmaschine (102) in dem Thermische-Leistung-Erzeugungsmodus umfassen;
Bereitstellen eines zweiten Satzes von kennzeichnenden Maschinenplänen, die Betriebsparameter zum Betreiben der internen Brennkraftmaschine (102) in dem Elektrische-Leistung-Erzeugungsmodus umfassen; und
Umschalten zwischen den ersten und zweiten Sätzen von kennzeichnenden Maschinenplänen bei einer Eingabe, wobei das Umschalten weiter umfasst:
Bestimmen einer elektrischen Leistungsausgabe (Pₑₗ);
Bestimmen eines elektrischen Leistungsbedarfs (P_{el, dem});
Bestimmen, ob die elektrische Leistungsausgabe (Pₑₗ) unterhalb des elektrischen Leistungsbedarfs (P_{el, dem}) liegt; und
Umschalten von dem Thermische-Leistung-Erzeugungsmodus in den Elektrische-Leistung-Erzeugungsmodus, wenn die elektrische Leistungsausgabe (Pₑₗ) unterhalb des elektrischen Leistungsbedarfs (P_{el, dem}) liegt; und/oder
Bestimmen einer thermischen Leistungsausgabe (Pₜₕ);
Bestimmen eines thermischen Leistungsbedarfs (P_{th, dem});
Bestimmen, ob die thermische Leistungsausgabe (Pₜₕ) unterhalb des thermischen Leistungsbedarfs (P_{th, dem}) liegt; und
Umschalten von dem Elektrische-Leistung-Erzeugungsmodus in den Thermische-Leistung-Erzeugungsmodus, wenn die thermische Leistungsausgabe (Pₜₕ) unterhalb des thermischen Leistungsbedarfs (P_{th, dem}) liegt,
das Verfahren weiter umfassend:
Bestimmen, dass der thermische Leistungsbedarf (P_{th, dem}) eine maximale thermische Leistungsausgabe (P_{th, max}) übertrifft; und/oder
Bestimmen, dass der elektrische Leistungsbedarf (P_{el, dem}) eine maximale elektrische Leistungsausgabe (P_{el, max}) übertrifft; und
Betreiben der internen Brennkraftmaschine im abgesicherten Modus unter Verwendung von Betriebsparametern, die einen abgesicherten Betrieb der internen Brennkraftmaschine (102) ergeben, wenn es bestimmt wird, dass der thermische oder elektrische Leistungsbedarf die jeweilige maximale thermische oder elektrische Leistungsausgabe übertrifft.

2. Verfahren nach Anspruch 1, wobei für den ersten Satz von kennzeichnenden Maschinenplänen Betriebsparameter derart ausgewählt werden, dass der Betrieb der internen Brennkraftmaschine (102) eine erhöhte Abgastemperatur ergibt.

3. Verfahren nach den Ansprüche 1 und 2, wobei für den zweiten Satz von kennzeichnenden Maschinenplänen Betriebsparameter derart ausgewählt werden, dass der Betrieb der internen Brennkraftmaschine (102) ein erhöhtes Ausgabemoment ergibt.

4. Verfahren nach einem der vorstehenden Ansprüche, wobei die ersten und die zweiten Sätze von kennzeichnenden Maschinenplänen mindestens einen Betriebsparameter aus der Gruppe umfassend eine Einlasslufttemperatur, einen Einlassluftdruck, ein Luft-zu-Kraftstoff-Verhältnis, einen Vorkammer-Gaszufuhrdruck, eine Vorkammer-Gaszufuhrdauer, einen Zündkraftstoff-Einspritzdruck, eine Zündkraftstoff-Einspritzdauer, einen Zündungszeitpunkt, einen Zündkraftstoffzeitpunkt, eine Ladelufttemperatur, einen Ladeluftdruck, einen Ventilzeitpunkt, mehrfache Kraftstoff- und Zündkraftstoffeinspritzungen und ein Verdichtungsverhältnis einschließen.

5. Verfahren nach einem der vorstehenden Ansprüche, wobei Umschalten von dem ersten zu dem zweiten Satz von kennzeichnenden Maschinenplänen mindestens eine von den folgenden Anpassungen von Betriebsparametern umfasst:
Erhöhen eines Luft-zu-Kraftstoff-Verhältnisses;
Verstellen eines Zündzeitpunkts;
Verringern einer Einlasslufttemperatur;
Verringern einer Ladelufttemperatur;
Erhöhen eines Miller-Zyklus; und
Erhöhen eines Verdichtungsverhältnisses, wobei
die Anpassungen von Betriebsparametern invertiert werden, wenn die interne Brennkraftmaschine (102) von dem zweiten zu dem ersten Satz von kennzeichnenden Maschinenplänen umgeschaltet wird.

6. Verfahren nach Anspruch 5, wobei Anpassen einer Einlasslufttemperatur weiter Erwärmen/Abkühlen der Einlassluft und/oder Verdichten/Ausdehnen der Einlassluft umfasst.

7. Verfahren nach den Ansprüchen 5 und 6, wobei Anpassen eines Miller-Zyklus durch Verändern eines Betätigungszeitpunkts von Einlassventilen und/oder Auslassventilen unter Verwendung von, zum Beispiel, einer flexiblen Nockentechnologie durchgeführt wird, die einen Nockenverfolger einschließt, der dafür eingerichtet ist, einer Nocke einer Nockenwelle zu folgen, wobei der Nockenverfolger relativ zu der Nockenwellenachse zum Einstellen eines Betätigungszeitpunkts von Komponenten verlagerbar ist, die mit dem Nockenverfolger verbunden sind, wie beispielsweise Betriebsheber von Einlass- und/oder Auslassventilen.

8. Verfahren nach einem der vorstehenden Ansprüche, wobei Umschalten zwischen dem Thermische-Leistung-Erzeugungsmodus und dem Elektrische-Leistung-Erzeugungsmodus nur durchgeführt wird, wenn eine Reihe von aufeinanderfolgenden Eingaben denselben Leistungserzeugungsmodus angibt, wodurch Rauschen in der bereitgestellten Eingabe berücksichtigt wird.

9. Verfahren nach einem der vorstehenden Ansprüche, wobei Umschalten zwischen dem Thermische-Leistung-Erzeugungsmodus und dem Elektrische-Leistung-Erzeugungsmodus in einem einzelnen Schritt oder über eine Vielzahl von Einstellungsschritten durchgeführt wird, wodurch ein sanfterer Übergang zwischen den Leistungserzeugungsmodi bereitgestellt wird.

10. Verfahren nach Anspruch 1, wobei Umschalten zwischen dem Thermische-Leistung-Erzeugungsmodus und dem Elektrische-Leistung-Erzeugungsmodus nur durchgeführt wird, wenn die bestimmte thermische oder elektrische Leistungsausgabe (Pₜₕ; Pₑₗ) kleiner als ein Schwellenabschnitt des jeweiligen thermischen oder elektrischen Leistungsbedarfs (P_{th, dem}; P_{el, dem}) ist, wodurch Fluktuationen in den bestimmten Leistungsausgaben und/oder Leistungsbedarfen berücksichtigt werden.

11. Interne Brennkraftmaschine (102), die dafür eingerichtet ist, sowohl mit einem elektrischen Generator (104) zum Erzeugen von elektrischer Leistung als auch einem Wärmerückgewinnungssystem (106) zum Erzeugen von thermischer Leistung gekoppelt zu sein, wobei die interne Brennkraftmaschine (102) in einem Elektrische-Leistung-Erzeugungsmodus und einem Thermische-Leistung-Erzeugungsmodus betreibbar ist, die interne Brennkraftmaschine (102) umfassend:
ein Luftzufuhrsystem (110), das dafür eingerichtet ist, Luft an eine Verbrennungseinheit (108) der internen Brennkraftmaschine (102) bereitzustellen;
ein Kraftstoffzufuhrsystem (112), das dafür eingerichtet ist, Kraftstoff an die Verbrennungseinheit (108) bereitzustellen;
ein Kraftstoffzündungssystem (114), das dafür eingerichtet ist, ein Kraftstoff-LuftGemisch, das in die Verbrennungseinheit (108) eingelassen wird, zu zünden; und
eine Steuereinheit (190), die mit dem Luftzufuhrsystem (110), dem Kraftstoffzufuhrsystem (112) und dem Kraftstoffzündungssystem (114) betriebsverbunden ist, wobei die Steuereinheit (190) einen Speicher umfasst, der dafür eingerichtet ist, einen ersten Satz von kennzeichnenden Maschinenplänen, die Betriebsparameter zum Betreiben der internen Brennkraftmaschine (102) in dem Thermische-Leistung-Erzeugungsmodus umfassen, und einen zweiten Satz von kennzeichnenden Maschinenplänen, die Betriebsparameter zum Betreiben der internen Brennkraftmaschine (102) in dem Elektrische-Leistung-Erzeugungsmodus umfassen, zu speichern, wobei die Steuereinheit (190) dafür eingerichtet ist, zwischen den ersten und zweiten Sätzen von kennzeichnenden Maschinenplänen bei einer Eingabe umzuschalten,
wobei die Steuereinheit (190) dafür eingerichtet ist:
eine elektrische Leistungsausgabe (Pₑₗ) zu bestimmen;
einen elektrischen Leistungsbedarf (P_{el, dem}) zu bestimmen;
zu bestimmen, ob die elektrische Leistungsausgabe (Pₑₗ) unterhalb des elektrischen Leistungsbedarfs (P_{el, dem}) liegt; und
von dem Thermische-Leistung-Erzeugungsmodus in den Elektrische-Leistung-Erzeugungsmodus umzuschalten, wenn die elektrische Leistungsausgabe (Pₑₗ) unterhalb des elektrischen Leistungsbedarfs (P_{el, dem}) liegt; und/oder
eine thermische Leistungsausgabe (Pₜₕ) zu bestimmen;
einen thermischen Leistungsbedarf (P_{th, dem}) zu bestimmen;
zu bestimmen, ob die thermische Leistungsausgabe (Pₜₕ) unterhalb des thermischen Leistungsbedarfs (P_{th, dem}) liegt; und
von dem Elektrische-Leistung-Erzeugungsmodus in den Thermische-Leistung-Erzeugungsmodus umzuschalten, wenn die thermische Leistungsausgabe (Pₜₕ) unterhalb des thermischen Leistungsbedarfs (P_{th, dem}) liegt, und
wobei die Steuereinheit (190) weiter dafür eingerichtet ist:
zu bestimmen, dass der thermische Leistungsbedarf (P_{th, dem}) eine maximale thermische Leistungsausgabe (P_{th, max}) übertrifft; und/oder
zu bestimmen, dass der elektrische Leistungsbedarf (P_{el, dem}) eine maximale elektrische Leistungsausgabe (P_{el, max}) übertrifft; und
die interne Brennkraftmaschine im abgesicherten Modus unter Verwendung von Betriebsparametern zu betreiben, die einen abgesicherten Betrieb der internen Brennkraftmaschine (102) ergeben, wenn es bestimmt wird, dass der thermische oder elektrische Leistungsbedarf die jeweilige maximale thermische oder elektrische Leistungsausgabe übertrifft.

12. Kraft-Wärme-Kopplungsanlage (100), wie beispielsweise ein Blockheizkraftwerk, die Kraft-Wärme-Kopplungsanlage (100) umfassend:
eine interne Brennkraftmaschine (102) nach Anspruch 11;
einen elektrischen Generator (104), der mit der internen Brennkraftmaschine (102) antreibbar gekoppelt ist und dafür eingerichtet ist, mechanische Leistung der internen Brennkraftmaschine (102) in elektrische Leistung umzuwandeln;
ein Wärmerückgewinnungssystem (106), das mit der internen Brennkraftmaschine (102) gekoppelt ist und dafür eingerichtet ist, durch die interne Brennkraftmaschine (102) erzeugte Wärme in thermische Leistung umzuwandeln, wobei
die Steuereinheit (190) der internen Brennkraftmaschine (102) dafür eingerichtet ist:
eine elektrische Leistungsausgabe (Pₑₗ) des elektrischen Generators (104) und eine thermische Leistungsausgabe (Pₜₕ) des Wärmerückgewinnungssystems (106) zu bestimmen;
einen elektrischen Leistungsbedarf (P_{el, dem}) und einen thermischen Leistungsbedarf (P_{th, dem}) zu bestimmen, die durch die Kraft-Wärme-Kopplungsanlage (100) bereitgestellt werden sollen; und
die interne Brennkraftmaschine (102) von dem ersten zu dem zweiten Satz von kennzeichnenden Maschinenplänen umzuschalten, wenn der elektrische Leistungsbedarf (P_{el, dem}) die elektrische Leistungsausgabe (Pₑₗ) übertrifft, und von dem zweiten zu dem ersten Satz von kennzeichnenden Maschinenplänen, wenn der thermische Leistungsbedarf (P_{th, dem}) die thermische Leistungsausgabe (Pₜₕ) übertrifft.

## Revendications

1. Procédé de fonctionnement d'un moteur à combustion interne (102) configuré pour être couplé à la fois à un générateur électrique (104) pour la production d'énergie électrique et à un système de récupération de chaleur (106) pour la production d'énergie thermique, le moteur à combustion interne (102) pouvant fonctionner dans un mode de production d'énergie électrique et un mode de production d'énergie thermique, le procédé comprenant :
la fourniture d'un premier ensemble de cartes de moteur caractéristiques comprenant des paramètres de fonctionnement pour le fonctionnement du moteur à combustion interne (102) dans le mode de production d'énergie thermique ;
la fourniture d'un deuxième ensemble de cartes de moteur caractéristiques comprenant des paramètres de fonctionnement pour le fonctionnement dudit moteur à combustion interne (102) dans le mode de production d'énergie électrique ; et
la commutation entre les premier et deuxième ensembles de cartes de moteur caractéristiques lors d'une entrée, dans lequel la commutation comprend en outre :
la détermination d'une sortie d'énergie électrique (Pₑₗ) ;
la détermination d'une demande d'énergie électrique (P_{el, dem}) ;
la détermination du fait si la sortie d'énergie électrique (Pₑₗ) est inférieure à la demande d'énergie électrique (P_{el, dem}) ; et
la commutation du mode de production d'énergie thermique au mode de production d'énergie électrique, si la sortie d'énergie électrique (Pₑₗ) est inférieure à la demande d'énergie électrique (P_{el, dem}) ; et/ou
la détermination d'une sortie d'énergie thermique (Pₜₕ) ;
la détermination d'une demande d'énergie thermique (P_{th, dem}) ;
la détermination du fait si la sortie d'énergie thermique (Pₜₕ) est inférieure à la demande d'énergie thermique (P_{th, dem}) ; et
la commutation du mode de production d'énergie électrique au mode de production d'énergie thermique, si la sortie d'énergie thermique (Pₜₕ) est inférieure à la demande d'énergie thermique (P_{th, dem}),
le procédé comprenant en outre :
la détermination du fait que la demande d'énergie thermique (P_{th, dem}) dépasse une sortie d'énergie thermique maximum (P_{th, max}) ; et/ou
la détermination du fait que la demande d'énergie électrique (P_{el, dem}) dépasse une sortie d'énergie électrique maximum (P_{el, max}) ; et
le fonctionnement du moteur à combustion interne en mode sûr en utilisant des paramètres de fonctionnement qui entraînent un fonctionnement sûr du moteur à combustion interne (102) lorsqu'il est déterminé que la demande d'énergie thermique ou électrique dépasse la sortie d'énergie thermique ou électrique maximum respective.

2. Procédé selon la revendication 1, dans lequel pour le premier ensemble de cartes de moteur caractéristiques, des paramètres de fonctionnement sont sélectionnés de sorte que le fonctionnement du moteur à combustion interne (102) entraîne une température de gaz d'échappement accrue.

3. Procédé selon les revendications 1 et 2, dans lequel pour le deuxième ensemble de cartes de moteur caractéristiques, des paramètres de fonctionnement sont sélectionnés de sorte que le fonctionnement du moteur à combustion interne (102) entraîne un couple de sortie accru.

4. Procédé selon l'une quelconque des revendications précédentes, dans lequel le premier et le deuxième ensembles de cartes de moteur caractéristiques incluent au moins un paramètre de fonctionnement du groupe comprenant une température d'air d'admission, une pression d'air d'admission, un rapport air-carburant, une pression d'alimentation en gaz de préchambre, une durée d'alimentation en gaz de préchambre, une pression d'injection de carburant d'allumage, une durée d'injection de carburant d'allumage, une synchronisation d'allumage, une synchronisation de carburant d'allumage, une température d'air de suralimentation, une pression d'air de suralimentation, une synchronisation de soupape, des injections de carburant et de carburant d'allumage multiples, et un rapport de compression.

5. Procédé selon l'une quelconque des revendications précédentes, dans lequel la commutation du premier au deuxième ensemble de cartes de moteur caractéristiques comprend au moins une des adaptations suivantes des paramètres de fonctionnement :
augmentation d'un rapport air-carburant ;
avancement d'une synchronisation d'allumage ;
diminution d'une température d'air d'admission ;
diminution d'une température d'air de suralimentation ;
augmentation d'un cycle de Miller; et
augmentation d'un rapport de compression, dans lequel
lesdites adaptations de paramètres de fonctionnement sont inversées, lorsque le moteur à combustion interne (102) est commuté du deuxième au premier ensemble de cartes de moteur caractéristiques.

6. Procédé selon la revendication 5, dans lequel l'adaptation d'une température d'air d'admission comprend en outre le chauffage/refroidissement de l'air d'admission et/ou la compression/expansion de l'air d'admission.

7. Procédé selon les revendications 5 et 6, dans lequel l'adaptation d'un cycle de Miller est réalisée par changement d'une synchronisation d'actionnement de soupapes d'entrée et/ou de soupapes de sortie en utilisant, par exemple, une technologie de came flexible incluant un suiveur de came configuré pour suivre une came d'un arbre à cames, le suiveur de came étant déplaçable par rapport à l'axe d'arbre à cames pour le réglage d'une synchronisation d'actionnement de composants reliés au suiveur de came, tels que des éléments de levage de fonctionnement de soupapes d'entrée et/ou de sortie.

8. Procédé selon l'une quelconque des revendications précédentes, dans lequel la commutation entre le mode de production d'énergie thermique et le mode de production d'énergie électrique est réalisée seulement si une série d'entrées consécutives indique le même mode de production d'énergie, tenant compte ce faisant du bruit dans l'entrée fournie.

9. Procédé selon l'une quelconque des revendications précédentes, dans lequel la commutation entre le mode de production d'énergie thermique et le mode de production d'énergie électrique est réalisée en une seule étape ou sur une pluralité d'étapes de réglage, fournissant ce faisant une transition plus lisse entre les modes de production d'énergie.

10. Procédé selon la revendication 1, dans lequel la commutation entre le mode de production d'énergie thermique et le mode de production d'énergie électrique est réalisée seulement lorsque la sortie d'énergie thermique ou électrique déterminée (Pₜₕ ; Pₑₗ) est inférieure à une portion de seuil de la demande d'énergie thermique ou électrique respective (P_{th, dem} ; P_{el, dem}), tenant compte ce faisant des fluctuations dans les sorties d'énergie et/ou demandes d'énergie déterminées.

11. Moteur à combustion interne (102) configuré pour être couplé à la fois à un générateur électrique (104) pour la production d'énergie électrique et à un système de récupération de chaleur (106) pour la production d'énergie thermique, le moteur à combustion interne (102) pouvant fonctionner dans un mode de production d'énergie électrique et un mode de production d'énergie thermique, le moteur à combustion interne (102) comprenant :
un système d'alimentation en air (110) configuré pour fournir de l'air à une unité de combustion (108) du moteur à combustion interne (102) ;
un système d'alimentation en carburant (112) configuré pour fournir du carburant à l'unité de combustion (108) ;
un système d'allumage de carburant (114) configuré pour allumer un mélange carburant-air admis à l'unité de combustion (108) ; et
une unité de commande (190) reliée de manière fonctionnelle au système d'alimentation en air (110), au système d'alimentation en carburant (112) et au système d'allumage de carburant (114), l'unité de commande (190) comprenant une mémoire configurée pour stocker un premier ensemble de cartes de moteur caractéristiques comprenant des paramètres de fonctionnement pour le fonctionnement du moteur à combustion interne (102) dans le mode de production d'énergie thermique et un deuxième ensemble de cartes de moteur caractéristiques comprenant des paramètres de fonctionnement pour le fonctionnement dudit moteur à combustion interne (102) dans le mode de production d'énergie électrique, l'unité de commande (190) étant configurée pour commuter entre les premier et deuxième ensembles de cartes de moteur caractéristiques lors d'une entrée,
dans lequel l'unité de commande (190) est configurée pour :
déterminer une sortie d'énergie électrique (Pₑₗ) ;
déterminer une demande d'énergie électrique (P_{el, dem}) ;
déterminer si la sortie d'énergie électrique (Pₑₗ) est inférieure à la demande d'énergie électrique (P_{el, dem}) ; et
commuter du mode de production d'énergie thermique au mode de production d'énergie électrique, si la sortie d'énergie électrique (Pₑₗ) est inférieure à la demande d'énergie électrique (P_{el, dem}) ; et/ou
déterminer une sortie d'énergie thermique (Pₜₕ) ;
déterminer une demande d'énergie thermique (P_{th, dem}) ;
déterminer si la sortie d'énergie thermique (Pₜₕ) est inférieure à la demande d'énergie thermique (P_{th, dem}) ; et
commuter du mode de production d'énergie électrique au mode de production d'énergie thermique, si la sortie d'énergie thermique (Pₜₕ) est inférieure à la demande d'énergie thermique (P_{th, dem}), et
dans lequel l'unité de commande (190) est configurée en outre pour :
déterminer que la demande d'énergie thermique (P_{th, dem}) dépasse une sortie d'énergie thermique maximum (P_{th, max}) ; et/ou
déterminer que la demande d'énergie électrique (P_{el, dem}) dépasse une sortie d'énergie électrique maximum (P_{el, max}) ; et
faire fonctionner le moteur à combustion interne en mode sûr en utilisant des paramètres de fonctionnement qui entraînent un fonctionnement sûr du moteur à combustion interne (102) lorsqu'il est déterminé que la demande d'énergie thermique ou électrique dépasse la sortie d'énergie thermique ou électrique maximum respective.

12. Installation de cogénération (100), telle qu'une centrale thermique et électrique combinée, l'installation de cogénération (100) comprenant :
un moteur à combustion interne (102) selon la revendication 11 ;
un générateur électrique (104) couplé en entraînement au moteur à combustion interne (102) et configuré pour convertir l'énergie mécanique du moteur à combustion interne (102) en énergie électrique ;
un système de récupération de chaleur (106) couplé au moteur à combustion interne (102) et configuré pour convertir la chaleur produite par le moteur à combustion interne (102) en énergie thermique, dans laquelle
l'unité de commande (190) du moteur à combustion interne (102) est configurée pour :
déterminer une sortie d'énergie électrique (Pₑₗ) du générateur électrique (104) et une sortie d'énergie thermique (Pₜₕ) du système de récupération de chaleur (106) ;
déterminer une demande d'énergie électrique (P_{el, dem}) et une demande d'énergie thermique (P_{th, dem}) à fournir par l'installation de cogénération (100) ; et
commuter le moteur à combustion interne (102) du premier au deuxième ensemble de cartes de moteur caractéristiques si la demande d'énergie électrique (P_{el, dem}) dépasse la sortie d'énergie électrique (Pₑₗ), et du deuxième au premier ensemble de cartes de moteur caractéristiques si la demande d'énergie thermique (P_{th, dem}) dépasse la sortie d'énergie thermique (Pₜₕ).
